# EUROPEAN PATENT APPLICATION

(11) **EP 4 454 926 A2**
(43) Date of publication of application: **30.10.2024**
(21) Application number: 24172266.9
(22) Date of filing: 24.04.2024
(51) Int. Cl.: B60L 1/00, B60L 50/10, B60L 50/15, B60L 58/18

(54) **CONTROL SYSTEM FOR ELECTRIC VEHICLES**

(30) Priority: 25.04.2023 US 202363498171 P
(71) Applicant: Transportation IP Holdings, LLC, Norwalk, CT 06851 (US)
(72) Inventor: Young, Henry Todd, Erie (US); Kuttenkuler, Jason Daniel, Erie (US); Wallace, Daniel Robert, Fulton (US); Ryan, David Andrew, Peoria (US); Wolff, Jeffrey John, Erie (US)
(74) Representative: K&L Gates LLP

(57) **Abstract**

A system may include an energy provision system, a first converter, a second converter, a traction system, and an auxiliary system. The energy provision system may provide a first voltage. The first converter may increase the first voltage from the energy provision system from the first voltage into at least a second voltage. The traction system of a vehicle may be powered by the second voltage from the first converter. The second converter may decrease the first voltage from the energy provision system from the first voltage to a third voltage which may be less than the second voltage. The auxiliary system of the vehicle may be powered by the third voltage from the second converter that may be less than the second voltage.

## Description

### CROSS-REFERENCE TO RELATED APPLICATION

This application claims benefit under 35 U.S.C. § 119(e) to U.S. Provisional Application No. 63/498,171, filed April 24, 2023, entitled "CONTROL SYSTEM FOR ELECTRIC VEHICLES," the entire disclosure of which is hereby incorporated by reference herein.

### BACKGROUND

### Technical Field.

The present disclosure relates generally to systems and methods for topology for an electric vehicle.

### Discussion of Art.

Vehicles, for example automobiles, trains, buses, off-highway vehicles (OHV), may require an energy source that provides energy to power one or more systems of the vehicle. Vehicles may require a different energy source or configuration based on the designated purpose. For example, OHV may be used for a plurality of purposes, such as haul truck operations in an open pit surface mine. Such OHV, including trolley-connected OHVs and other large traction vehicles, may be powered by electric traction motors coupled in driving relationship to one or more axles or motor-wheel sets of the vehicle. In the motoring or traction mode of operation, the traction motors may be supplied with electric current from a controllable source of electric power. The source of electric power may also be used to power auxiliary systems of the OHV. The source of electric power may be an engine-driven traction alternator/rectifier/inverter combination, a direct current drive source including a DC motor without an inverter, one or more batteries, fuel cells, photovoltaic devices, or the like.

The different systems of the vehicle, for example the traction system and the auxiliary system, may require different levels of voltage to operate. Thus, each system may require the electric power from the energy source to be modified, for example by a converter, to achieve a desired voltage. However, such components may contribute to the overall size and weight of the vehicle and thus to the costs of the vehicle. It may be desirable to have a system and method that differs from those that are currently available.

### BRIEF DESCRIPTION

In accordance with one example or aspect, a system is provided that may include an energy provision system, a first converter, a second converter, a traction system, and an auxiliary system. The energy provision system may provide a first voltage. The first converter may increase the first voltage from the energy provision system from the first voltage into at least a second voltage. The traction system of a vehicle may be powered by the second voltage from the first converter. The second converter may decrease the first voltage from the energy provision system from the first voltage to a third voltage which may be less than the second voltage. The auxiliary system of the vehicle may be powered by the third voltage from the second converter that may less than the second voltage.

In accordance with one example or aspect, a method is provided that may include supplying electric current at a first voltage from an energy provision system. The method may include increasing the first voltage of the electric current from the energy provision system to at least a second voltage using a first converter. The method may include powering a traction system of a vehicle using the electric current at the second voltage. The method may include decreasing the first voltage of the electric current from the energy provision system to a third voltage using a second converter. The method may include powering an auxiliary system of the vehicle using electric current at the third voltage.

In accordance with one example or aspect, a method is provided that may include powering a traction system of a vehicle using a first voltage from a first energy provision system. The method may include powering an auxiliary system of the vehicle using a second voltage from a second energy provision system. The second voltage may be less than the first voltage. The method may include providing electrical current from the traction system to the second energy provision system using a converter to provide the electrical current to the second energy provision system at the second voltage.

In accordance with one example or aspect, a system is provided that may include an energy provision system, a converter, a traction system, and an auxiliary system. The energy provision system may provide a first voltage. The converter may decrease the first voltage from the energy provision system into a threshold voltage. The traction system of a vehicle may be powered by the first voltage from the energy provision system that may be greater than the threshold voltage. The auxiliary system of the vehicle may receive and be powered by the first voltage from the converter that may be at or below the threshold voltage.

In accordance with one example or aspect, a system is provided may include a first energy provision system, a second energy provision system, a traction system of a vehicle, an auxiliary system of the vehicle, and a converter. The first energy provision system may provide a first voltage. The traction system may be powered by the first voltage from the first energy provision system. The auxiliary system may be powered by a second voltage from the second energy provision system. The second voltage may be less than the first voltage. The converter may receive electrical current from the traction system and may convert the electrical current to the second voltage. The converter may provide the second voltage to the second energy provision system.

In accordance with one example or aspect, a system is provided that may include an energy provision system, a traction system of a vehicle, and an auxiliary system of the vehicle. The energy provision system may provide a first voltage. The traction system may be powered by the first voltage from the energy provision system. The auxiliary system may be powered by the first voltage from the energy provision system.

### BRIEF DESCRIPTION OF THE DRAWINGS

The subject matter may be understood from reading the following description of nonlimiting embodiments, with reference to the attached drawings, wherein below:
FIG. 1 is a block diagram a vehicle including a traction system and an auxiliary system, according to at least one example of the present disclosure;
FIG. 2 is a block diagram of a control system integrated with a vehicle, according to at least one example of the present disclosure;
FIG. 3 is a block diagram of a control system integrated with a vehicle, according to at least one example of the present disclosure;
FIG. 4 is a block diagram of a control system integrated with a vehicle, according to at least one example of the present disclosure;
FIG. 5 is a block diagram of a control system integrated with a vehicle, according to at least one example of the present disclosure;
FIG. 6 is a block diagram of a control system integrated with a vehicle, according to at least one example of the present disclosure;
FIG. 7 is a block diagram of a control system integrated with a vehicle, according to at least one example of the present disclosure;
FIG. 8 is a block diagram of a control system integrated with a vehicle, according to at least one example of the present disclosure;
FIG. 9 is a block diagram of a control system integrated with a vehicle, according to at least one example of the present disclosure; and
FIG. is a flow chart of a method of supplying power in a vehicle system, according to at least one example of the present disclosure.

### DETAILED DESCRIPTION

Examples of the subject matter described herein relate to a control system or a method of suppling power to systems of a vehicle. An embodiment may provide distribution of power to one or more systems of the vehicle that may have different energy requirements. The system may reduce the number and size of energy conversion devices which reduce weight, size, and cost of the system while increasing energy efficiency. Some embodiments in this disclosure may optimize performance of a powered system. An example powered system may be an off-highway vehicle.

While one or more embodiments are described in connection with an off-highway vehicle system as a powered system. Other suitable powered systems may include rail vehicles, automobiles, trucks (with or without trailers), buses, marine vessels, aircraft, mining vehicles, and industrial and agricultural vehicles. The vehicle systems described herein may be a single vehicle or may include multiple vehicles. With respect to multi-vehicle systems, the vehicles may be mechanically coupled with each other (e.g., by couplers) or virtually/logically coupled but not mechanically coupled. For example, vehicles may be logically but not mechanically coupled when the separate vehicles communicate with each other to coordinate movements of the vehicles with each other so that the vehicles travel together (e.g., as a convoy).

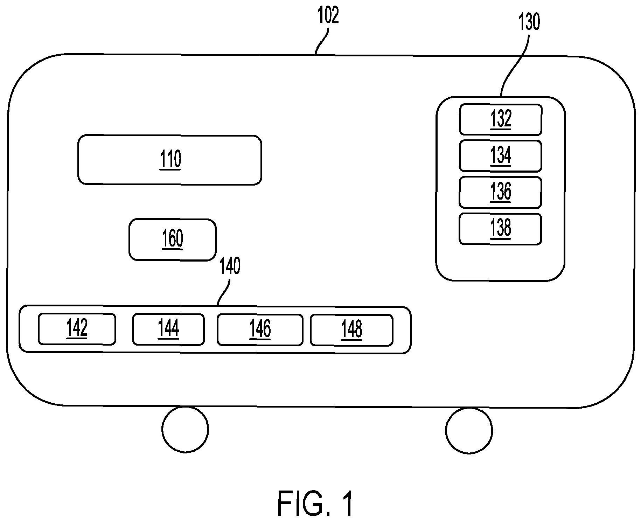

Fig. 1 is a block diagram of a vehicle 102 or vehicle system that may include a traction system 130 and an auxiliary system 140, according to at least one example of the present disclosure. The vehicle may include an energy provision system 110, the traction system, and the auxiliary system. The traction system may include or represent one or more motors of a propulsion system and/or a brake system (e.g., where the motors generate current during regenerative braking). The energy provision system may include one or more batteries, fuel cells, capacitors, photovoltaic devices, flywheels, alternators, generators, or the like.

In one example, the energy provision system may include an energy source and an energy storage device. The energy source may include a diesel powered system, a natural gas powered systems, bio-diesel powered systems, one or more battery sources, voltage sources (such as but not limited to capacitors), chemical sources, pressure based sources (such as but not limited to spring and/or hydraulic expansion), electrical current sources (such as but not limited to inductors), inertial sources (such as but not limited to flywheel devices), gravitational-based power sources, and/or thermal-based power sources. Additionally, the power source may be external, such as, but not limited to, an electrically powered system, where power may be sourced externally from overhead catenary wire, third rail, and/or magnetic levitation coils. In one example, the vehicle may include more than one energy provision systems. The energy provision systems may be arranged such that if a first energy provision system may fail, another energy provision system, such as a second energy provision system, may be able to power the load previously powered by the first energy provision system.

The vehicle may include a control system. The control system may include an onboard controller 160 that can communicate control signals to the energy provision system to control supply of the current to one or more components of the vehicle system. The controller may have hardware circuitry that may include and/or may be connected with one or more processors (e.g., one or more microprocessors, integrated circuits, microcontrollers, field programmable gate arrays, etc.). The controller may represent one or more control units or devices that may be operably connected to perform the operations described herein. In an embodiment, the one or more processors may be disposed in a single, unitary control unit. In another embodiment, the controller may include multiple different control units, and the processors may be distributed among the control units. The controller may include and/or may be connected with a tangible and non-transitory computer-readable storage medium (e.g., data storage device), referred to herein as memory. The memory may store program instructions (e.g., software) that are executed by the one or more processors to perform the operations described herein. The program instructions may include one or more algorithms utilized by the one or more processors to generate one or more outputs. The program instructions may provide functions, models, and/or neural networks used to generate the outputs. The program instructions may further dictate actions to be performed by the one or more processors.

The vehicle may include one or more converters. The converters may change one or more electrical parameters of the electrical energy received from the energy provision system to a level or range that may be appropriate for use by the systems of the vehicle. The electrical parameter that is changed may be voltage, phase, current, or the like. For example, the converter may include a DC/DC converter, a DC/AC converter, an AC/AC converter, an AC/DC converter, an inverter, rectifier, transformer, or the like that may modify a value of the electrical parameter of the electrical energy conducted from the energy provision system to the systems of the vehicle. The converter may be positioned between the energy provision system and the traction system. In one example, the converter may be positioned between the energy provision system and the auxiliary system. In one example, the converter may be positioned between the traction system and the auxiliary system. In various examples, converters may be placed at any or all of these positions.

The traction system may include multiple components. In the embodiment illustrated in Fig. 1, the traction system may include a traction inverter 132, a traction motor 134, a transmission 136, and resistor grids 138. In other examples, the traction system may include additional or different components. While components of the traction system are shown in Fig. 1, traction systems of subsequent figures may be shown without listing individual components. However, the traction systems in the subsequently shown figures may include the same or different components to the traction system shown in Fig. 1. The traction motor may be a part of a propulsion system that may operate to move the vehicle system along a route. The propulsion system can represent one or more engines, motors, transmissions, propellers, or the like, that generate propulsion to move the vehicle system. The propulsion system may include one or more propulsion devices that may be distributed across one or more vehicles of the vehicle system. The propulsion devices may operate together to control movement of the vehicle system. In one or more embodiments, one or more vehicles may include individual propulsion systems that may operate independent of the other propulsion systems of other vehicles.

The auxiliary system may include components of the vehicle that may not be associated with propulsion. The auxiliary system may include house power 142, for example head end power (HEP). The house power may include multiple power levels. In one example, the house power may be between 20 and 40V. In one example, the house power may be DC power of 12V, 24V, or 72V. In one example, the house power may be AC power of 50Hz, 60Hz, 120V, or 240V. The auxiliary system may include a hydraulic pump 144. The hydraulic pump may provide power a tool, such as a digger, excavator, or the like. The auxiliary system may include thermal management 146, for example heating, ventilation, and air condition (HVAC) of the vehicle, radiators, cooling pumps, blowers, or the like. The auxiliary system may include a thermal management system for the energy provision system, for example one or more batteries or one or more fuel cells. The auxiliary system may include fuel tender loads 148, for example regasification (e.g., converting liquefied natural gas at approximately -162 degrees Celsius back to natural gas at atmospheric temperature), thermal management loop, or the like. The auxiliary system may provide electrical energy at outlets for conveniences or necessities. The auxiliary system may include one or more resistor grids. In other examples, the auxiliary system may include additional or different components. While components of the auxiliary system are shown in Fig. 1, auxiliary systems of subsequent figures may be shown without listing individual components. However, the auxiliary systems in the subsequently shown figures may include the same or different components to the auxiliary system shown in FIG. 1.

The traction system may require a voltage in a specific operating range in order to power the traction system. In one example, the traction system may require a voltage in a range that is less than about 500V, in a range of from about,500V to about 1000V, from about 1000V to about 1200V, from about 1200V to about 2000V, or from about 2000V to about 3000V. In one embodiment, the traction system may operate at a voltage of about 1400V. In another example, the traction system may operate at a voltage of 2600V.

In contrast to the traction voltage described above, the auxiliary system may require a voltage in a range that is relatively lower voltage than the voltage required to power the traction system. That is, the auxiliary system may require a voltage in an auxiliary operating range and lower than the traction operating range. In one example, the auxiliary operating range may be a voltage that is less than 100V, or in a range from about 400V to about 500V, from about 500V to about 750V, from about 750V to about a 1000V, from about 1000V to about 1200V, or from about 1200V to about 1500V. In one embodiment, the auxiliary system may operate at a voltage of 700V. In another embodiment, the voltage may be about 110V. In another embodiment, the voltage may be about 220V. In one embodiment, the voltage may be as low as 12V. As a note to the difference and ranges selected with regard to traction and auxiliary voltage(s), these are selected with reference to the end use parameter requirements. For an on-road vehicle, the traction voltage may be about 200V, while the auxiliaries may operate at 12V. For a rail vehicle, the voltages may be 1200V/700V. Merely scaling on-road vehicle technologies for rail applications may not be sufficient. The ratio of voltages for on-road is about 20:1, while rail applications is about 2:1, and the auxiliaries for rail may be more than the low voltage lights and HVAC of a passenger car. That is, the rail vehicle auxiliary may need to operate a compressor that provides compressed air for hundred vehicles that are coupled to it such that the operating differences are significant. Mining vehicles may differ in their voltage requirements even among themselves insofar as the traction system for a mining vehicle may use nearly the same voltage as a tunneling bore or an electrically operated scoop or hoist.

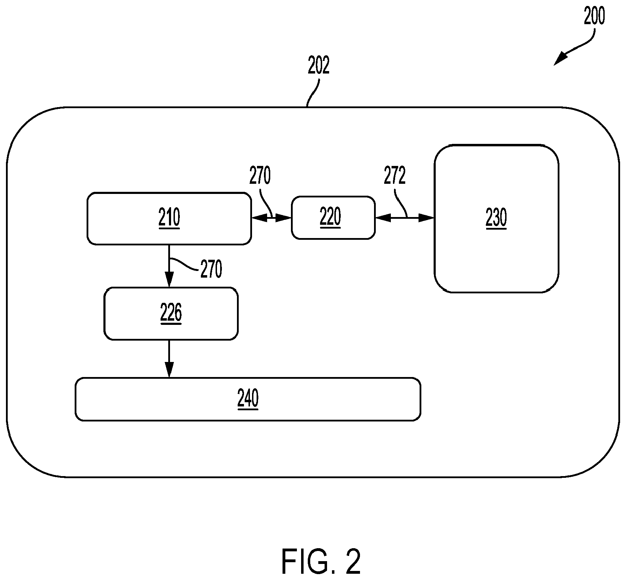

FIG. 2 illustrates a block diagram of a control system 200 integrated with a vehicle 202, according to at least one example of the present disclosure. The control system of FIG. 2 may illustrate an energy provision system 210 that may provide a low voltage output 270. An exemplary low voltage output may be in a range of from about 400V to about 1200V. The low voltage output may be within an auxiliary operating voltage range of an auxiliary system 240. As such, the auxiliary system may be directed to receive power directly from the energy provision system without the need for a step-down or step-up of the voltage. Thus, the system may not need the converter between the energy provision system and the auxiliary system. Not having the converter may reduce the overall weight, size, and cost of the vehicle system, as well may increase efficiency of the system by reducing energy loss associated with the converter stepping down or stepping up the voltage. In one example, the system may include a protective layer 226 or an isolating layer between the auxiliary system and the energy provision system. The protective layer may reduce or eliminate ripple or noise from the energy provision system. This may be in the circuit flowing power toward the auxiliary system. The protective layer may reduce or eliminate spikes in voltage and/or current. The protective layer may protect against thermal damage to the circuit. Suitable protective layers may include one or more of a fuse, a contactor, an inductor, a capacitor, a diode arrangement, a positive temperature coefficient (PTC) circuit (such as a thermistor), a converter, another energy provision system, and a passive filter.

The low voltage output of the energy provision system illustrated in FIG. 2 may provide a voltage that is below a traction operating voltage range of a traction system 230. A converter 220 may be positioned between the energy provision system and the traction system in order to increase the voltage from the energy provision system. The converter may receive the low voltage output from the energy provision system and may increase the low voltage output into at least a threshold voltage 272. The threshold voltage may be within the traction operating voltage range. The converter may direct the threshold voltage to the traction system to power the traction system.

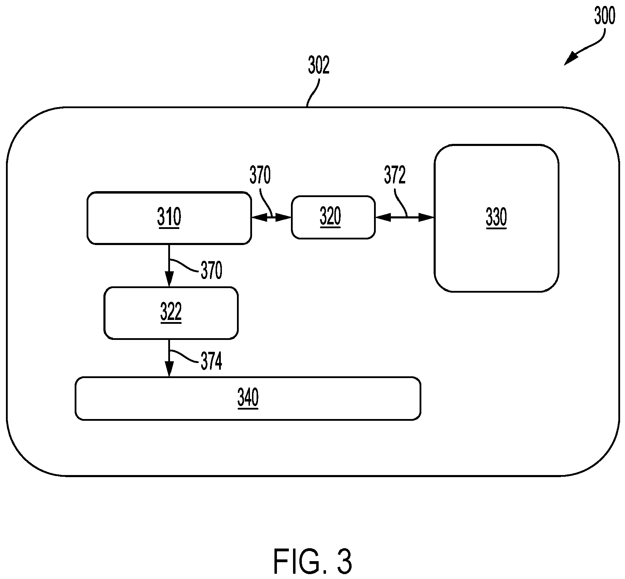

FIG. 3 is a block diagram of an embodiment with a control system 300 that may be integrated with a vehicle 302, according to one example. The control system of FIG. 3 may illustrate an energy provision system 310 that may provide a medium voltage output 370. As used herein, a medium voltage output may be in a range of from about 900V to about 3000V. In one example, the medium voltage output may below a voltage required to operate a traction system 330. A traction converter 320 may be positioned between the energy provision system and the traction system to step-up the voltage to at least a threshold voltage 372, which may be suitable to power the traction system. The medium voltage output may be above the voltage required to operate an auxiliary system 340. An auxiliary converter 322 may be positioned between the energy provision system and the auxiliary system to step-down the voltage to below a threshold voltage 374, which may be suitable to power the auxiliary system. While the control system using a medium voltage output energy provision system may require two converters, the converters may be smaller, as the medium voltage output may be closer to a middle ground between the higher voltage traction system and the lower voltage auxiliary system. In one example, the traction converter may step-up the voltage by a predetermined percentage, for example by 125% or less of the voltage from the energy provision system. In one example, the auxiliary converter may step-down the voltage by a predetermined percentage, for example by 125% or less of the voltage from the energy provision system.

The energy provision system 310 may be a single energy system or may consist of a bank of 1, 2, 3 or more energy systems. For each energy system there may be a dedicated converter providing parallel power sources to the traction system. The converter may provide power to the auxiliary system and may include independent inputs for each energy provision system. In one example, multiple converters may be provided to independently power the auxiliary system from any of the energy provision systems. The multiple converters may be sized or rated to individually power the auxiliary system. In one example, each energy provision system may provide a fraction of the power such that the auxiliary system may be fully powered when all of the multiple energy provision systems and converters may be operational, and a reduced performance of the auxiliary system may be provided if one or more of the energy provision systems or converters may not be functioning at full capacity.

The traction system may receive power from an off-board source such as a trolley line or stationary charge connection at a voltage compatible with the traction system. The converter may be used to reduce the voltage to a level compatible with energy provision system. Likewise, the energy provision system may receive power from an off-board source such as a battery charger while the vehicle may be stationary.

In one example, the energy provision system may receive an electrical current from an off-board source. The electrical current may act as a charging current to charge the energy provision system with the electrical current from the off-board source. The off-board source may include a trolley line, a catenary, a charging station, an electrified third rail, or the like. In one example, the off-board source may provide a powering voltage to power the traction system and/or the auxiliary system of the vehicle. When the powering voltage may be powering the traction system, the powering voltage may be at least the voltage required to power the traction system. In one example, the powering voltage may be stepped up or stepped down by a converter.

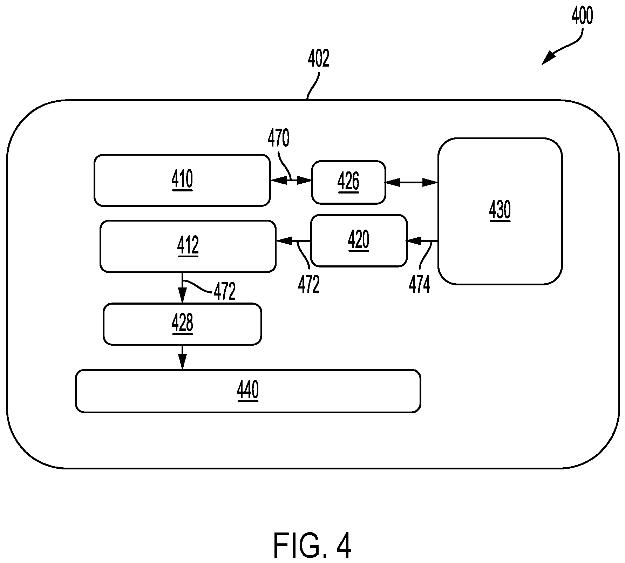

Figure 4 illustrates a block diagram of a control system 400 that may be integrated with a vehicle 402, according to one example. The control system may include a first energy provision system 410 and a second energy provision system 412. In one example, the first energy provision system may provide a first voltage 470 to power a traction system 430. The second energy provision system may provide a second voltage 472 to power an auxiliary system 440. The second voltage may be less than the first voltage. In this arrangement, the first energy provision system may be rated to provide the first voltage that may be useable by the traction system without the need for a converter to step-up or step-down the voltage. The second energy provision system may be rated to provide the second voltage that may be useable by the auxiliary system without the need for a converter to step-up or step-down the voltage. The control system may include a first protective layer 426 between the first energy provision system and the traction system and/or a second protective layer 428 between the second energy provision system and the auxiliary system. In one example, the first protective layer may allow the first energy provision system to provide the second voltage to power the auxiliary system. The second protective layer may allow the second energy provision system to provide the first voltage to power the traction system.

The traction system illustrated in FIG. 4 may provide electrical current 474 to the second energy provision system. A converter 420 may receive the electrical current from the traction system to step the electrical current down to a range that may include the second voltage. The second energy provision may accept the stepped down electrical current. In one example, the second energy provision may be charged by the stepped down electrical current. Optionally, the converter may be powered directly from energy provision system to allow charging of the second energy provisioning system without energizing the traction system.

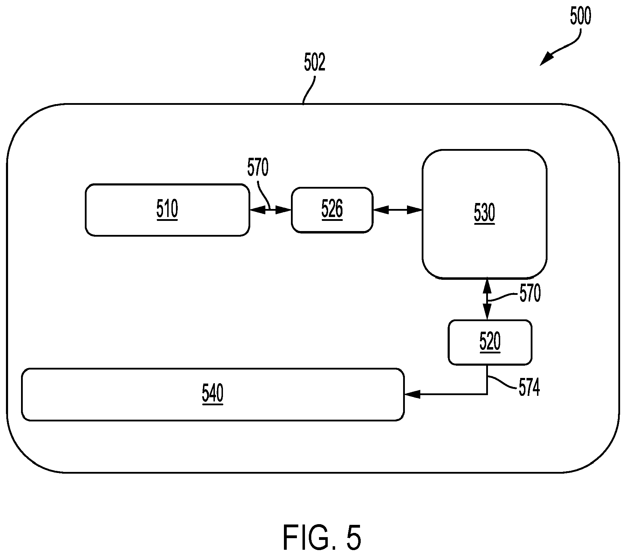

FIG. 5 is a block diagram of an embodiment having a control system 500 that may be integrated with a vehicle 502, according to one example. An energy provision system 510 may provide a first voltage output 570 that may be within a traction operating voltage range of a traction system 530 of the vehicle. As such, the traction system may be directed to receive power directly from the energy provision system without the need for a step-down or step-up of the first voltage. Thus, the system may not need a converter between the energy provision system and the traction system. Not having the traction converter may reduce the overall weight, size, and cost of the vehicle system, as well may increase efficiency of the system by reducing energy loss associated with the converter stepping down or stepping up the voltage. In one example, the system may include a protective layer 526 or an isolating layer between the traction system and the energy provision system.

In one example, the traction system may be used to power an auxiliary system 540. However, the first voltage from the traction system may be too high for operation of the auxiliary system. A converter 520 may decrease the first voltage received from the traction system to a lower, second voltage 574. The second voltage may be used to power the auxiliary system. Because the auxiliary system may be powered by the traction system in this arrangement, the auxiliary system may not be able to operate without powering the traction motor.

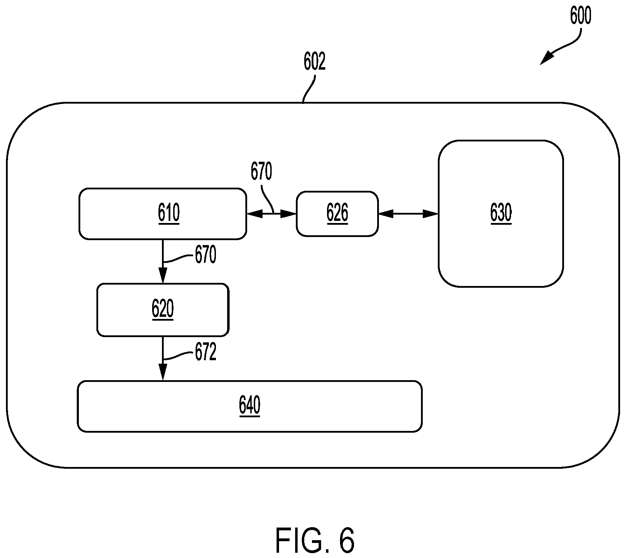

FIG. 6 is a block diagram of an embodiment that has a control system 600 that may be integrated with a vehicle 602, according to one example. Similar to the example illustrated in FIG. 5, an energy provision system 610 may provide a first voltage output 670 that may be within a traction operating voltage range of a traction system 630 of the vehicle. As such, the traction system may be directed to receive power directly from the energy provision system without the need for a step-down or step-up of the first voltage. In one example, the system may include a protective layer 626 or an isolating layer between the traction system and the energy provision system.

However, rather than the converter being positioned between the traction system and an auxiliary system 640, as in FIG. 5, a converter 620 may be positioned between the energy provision system and the auxiliary system. The converter may decrease or step-down the first voltage from the energy provision system into a second voltage 672, lower than the first voltage. The second voltage may be within the auxiliary operating voltage range. The converter may direct the second voltage to the auxiliary system to power the auxiliary system.

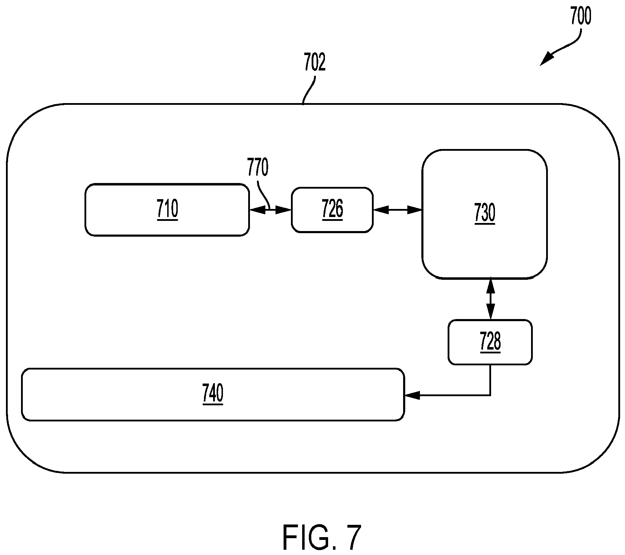

FIG. 7 is a block diagram of an embodiment having a control system 700 that may be integrated with a vehicle 702, according to one example. Similar to the example illustrated in FIG. 5, an energy provision system 710 may provide a first voltage output 770 that may be within a traction operating voltage range of a traction system 730 of the vehicle. As such, the traction system may be directed to receive power directly from the energy provision system without the need for a step-down or step-up of the first voltage. However, rather than having a converter step-down the voltage to power an auxiliary system, the auxiliary system may be a high voltage system. The first voltage may be within the auxiliary operating voltage range. The auxiliary system may be able to receive the first current from the traction system without the need for a converter to step-up or step-down the first voltage. In one example, the auxiliary system may receive the first current directly from the energy provision system, rather than from the traction system.

In one example, the system may include a protective layer 726 or an isolating layer between the traction system and the energy provision system and a protective layer 728 or an isolating layer between the auxiliary system and the traction system. In one example, a protective layer may be positioned between the auxiliary system and the energy provision system.

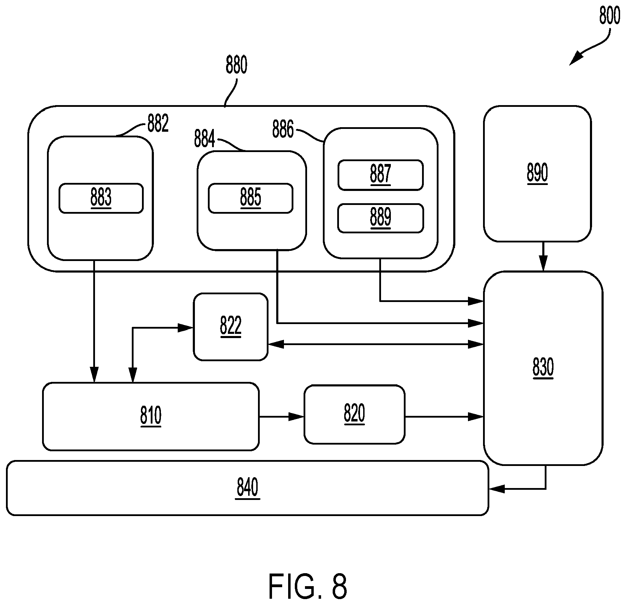

FIG. 8 illustrates a block diagram of a control system 800 that may be integrated with a vehicle, according to one example. The system may include a high voltage energy provision system 810 in communication with a traction system 830 via one or more diodes 820. The diodes may allow connection of the high voltage energy provision system with the traction system, as well as connecting the system to a power source 880, for example an offboard or onboard power source. The diodes may allow the connection of the traction system to the power source by being positioned between the traction system and the energy storage provision. When the traction system may be coupled with the power source, the diode may open to prevent flow from the power source to the energy provision system, through the traction system. Said another way, the diode may prevent an uncontrolled power flow to the energy provision system from the power source by opening to prevent the flow of energy. When the traction system is not coupled with the power source, the diode may allow flow of energy between from the energy provision system to the traction system.

The power source may be a high voltage power source. In one example, the power source may include the utility grid or a local microgrid, and/or may include a power generator, such as a fuel cell 882 or an engine/alternator arrangement 886. The utility grid or local microgrid may be offboard power sources, while the fuel cell or engine/alternator arrangement may be an onboard power source or an offboard power source. Suitable engines may include a diesel engine, a natural gas powered engine, a hydrogen powered engine, a dimethyl ether powered engine, and alcohol powered engine, and the like. Other sources of offboard power may include wind turbines and solar generators. The offboard power source may transmit that power to the vehicle via a trolley line 884, a stationary charging station 888, an electrified third rail, and the like. The fuel cell may include a DC/DC converter 883 that may step a voltage down and allow the energy provision system to receive energy from the fuel cell. In the example where the trolley is used, the trolley may be connected directly to the traction system and may be provide a voltage to power the traction system. The trolley may provide a voltage that may be within the useable voltage required by the traction system. In the example with the engine, the engine may include a generator/alternator 887. These may be couple to a rectifier 889. During operation the alternator may be operated by the engine to generate electric current. The rectifier may convert the AC power generated by the alternator to DC power, which it then may supply to a DC bus. The current generated ultimately may be supplied to traction system to power it. In one example, a stationary charging apparatus 890 may charge a battery system.

A converter 822 may be positioned between the traction system and the energy provision system to allow the charging of the energy provision system from the power source, through the traction system. Additionally, the converter may allow charging of the energy provision system by the traction system resulting from energy creation during a dynamic braking operation.

An auxiliary system 840 may be powered by a voltage provided by the traction system. In one example, the voltage provided by the traction system may be within an auxiliary system operating voltage range and the voltage may not need to be stepped up or stepped down. In one example, an auxiliary converter may be used to step down the voltage received from the traction system to be within the auxiliary system operating voltage range.

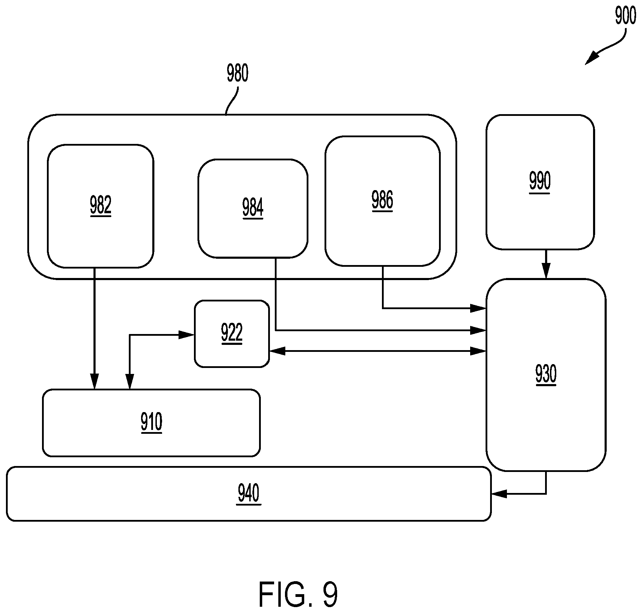

FIG. 9 is a block diagram of a control system 900 that may be integrated with a vehicle, according to one example. The system may be similar to the system illustrated in FIG. 8, but may include a lower voltage energy provision system 910 in communication with a traction system 930 via a converter 922. The converter may allow the charging of the energy provision system from the traction system. Additionally, the converter may increase the voltage from the energy provision system to power the traction system. The traction system may propel the vehicle. The energy provision system may provide a low voltage that may within an auxiliary operating voltage range to power an auxiliary system 940.

The system may connect to an offboard power source 980. The offboard power source may be a high voltage power source. In one example, the offboard power source may include a fuel cell 982 and an engine 986. The power may transfer to the vehicle via a trolley 984, a stationary charging station 988, an electrified third rail, and the like.

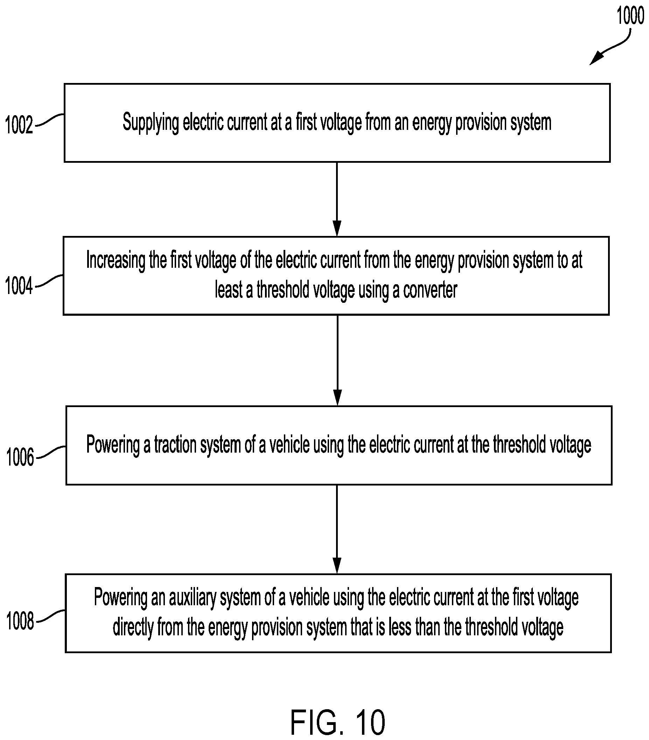

FIG. 10 is a flow chart of a method 1000 of supplying power in a vehicle system, according to one example. At step 1002, the method may include supplying electric current at a first voltage from an energy provision system. The first voltage may be selected to be a relative low voltage, a medium voltage, or a relatively higher voltage.

At step 1004, the method may include increasing the first voltage of the electric current from the energy provision system to at least a threshold voltage using a converter. Various systems may require the first voltage to be stepped up in order to operate.

At step 1006, the method may include powering a traction system of a vehicle using the electric current at the threshold voltage. The traction system may have a traction operating voltage range that may be above the first voltage, which may require the first voltage to be stepped up to at least the threshold voltage.

At step 1008, the method may include powering an auxiliary system of a vehicle using the electric current at the first voltage directly from the energy provision system that is less than the threshold voltage. The first voltage may be within an auxiliary operating voltage range of the auxiliary system. As such, the auxiliary system may be directed to receive power directly from the energy provision system without the need for a step-down or step-up of the voltage. Thus, the method may not need a converter between the energy provision system and the auxiliary system. Not having the converter may reduce the overall weight, size, and cost of the vehicle system, as well may increase efficiency of the system by reducing energy loss associated with the converter stepping down or stepping up the voltage.

In one embodiment, a system may include an energy provision system, a first converter, a second converter, a traction system, and an auxiliary system. The energy provision system may provide a first voltage. The first converter may increase the first voltage from the energy provision system from the first voltage into at least a second voltage. The traction system of a vehicle may be powered by the second voltage from the first converter. The second converter may decrease the first voltage from the energy provision system from the first voltage to a third voltage which may be less than the second voltage. The auxiliary system of the vehicle may be powered by the third voltage from the second converter that may less than the second voltage.

In one example, the energy provision system may include a bank of two or more energy systems. Each of the two or more energy systems may be independently connected through the first converter to the traction system. The two or more energy systems may be arranged such that one or more of the two or more energy systems may power the auxiliary system. The auxiliary system may include one or more of house power, a hydraulic pump, a thermal management system, one or more fuel tender loads, a resistor grid, or an air compressor. The traction system may include one or more of a traction inverter, a traction motor, and a resistor grid.

In one example, the auxiliary system may include implements for maintenance of wayside vehicles. The auxiliary system may be powered by the third voltage from the second converter separately of the traction system of the vehicle being powered by the second voltage from the first converter. The energy provision system may receive a charging current from an off-board source. The charging current may charge the energy provision system. The off-board source may communicate the power via a coupling that is one or more of a trolley line, a catenary, a charging station, or a third rail. The traction system may receive a powering voltage from an off-board source. The powering voltage may provide power to the traction system that may be at least the second voltage.

In one embodiment, a method may include supplying electric current at a first voltage from an energy provision system. The method may include increasing the first voltage of the electric current from the energy provision system to at least a second voltage using a first converter. The method may include powering a traction system of a vehicle using the electric current at the second voltage. The method may include decreasing the first voltage of the electric current from the energy provision system to a third voltage using a second converter. The method may include powering an auxiliary system of the vehicle using electric current at the third voltage.

In one example, the method may include receiving additional power from an off-board electrical source at a fourth voltage. The fourth voltage may be at or above the second voltage. The fourth voltage may power the traction motor. The method may include recharging an energy storage device with the second voltage.

In one embodiment, a method may include powering a traction system of a vehicle using a first voltage from a first energy provision system. The method may include powering an auxiliary system of the vehicle using a second voltage from a second energy provision system. The second voltage may be less than the first voltage. The method may include providing electrical current from the traction system to the second energy provision system using a converter to provide the electrical current to the second energy provision system at the second voltage.

In one example, the method may include filtering the electric current at the first voltage between the first energy provision system and the traction system. The method may include providing a secondary electrical current from the first energy provision system to the second energy provision system using a secondary converter to provide the secondary electrical current to the second energy provision system at the second voltage.

In one embodiment, a system may include an energy provision system, a converter, a traction system, and an auxiliary system. The energy provision system may provide a first voltage. The converter may decrease the first voltage from the energy provision system into a threshold voltage. The traction system of a vehicle may be powered by the first voltage from the energy provision system that may be greater than the threshold voltage. The auxiliary system of the vehicle may receive and be powered by the first voltage from the converter that may be at or below the threshold voltage.

In one example, the system may include a secondary converter that may decrease the first voltage to at or below the threshold voltage. The auxiliary system of the vehicle may receive and be powered by the first voltage from the secondary converter that is at or below the threshold voltage.

The auxiliary system may include one or more of house power, a hydraulic pump, a thermal management system, a fuel tender loads, a resistor grid, and an air compressor. The traction system may include one or more of a traction inverter, a traction motor, and a resistor grid. In one example, the energy provision system may operate at a minimum voltage of 800V.

In one embodiment, a system may include a first energy provision system, a second energy provision system, a traction system of a vehicle, an auxiliary system of the vehicle, and a converter. The first energy provision system may provide a first voltage. The traction system may be powered by the first voltage from the first energy provision system. The auxiliary system may be powered by a second voltage from the second energy provision system. The second voltage may be less than the first voltage. The converter may receive electrical current from the traction system and may convert the electrical current to the second voltage. The converter may provide the second voltage to the second energy provision system.

In one example, the second voltage may charge the second energy provision system.

In one embodiment, a system may include an energy provision system, a traction system of a vehicle, and an auxiliary system of the vehicle. The energy provision system may provide a first voltage. The traction system may be powered by the first voltage from the energy provision system. The auxiliary system may be powered by the first voltage from the energy provision system.

In one example, the system may include a protective layer that may be disposed between the energy provision system and the auxiliary system. The protective layer may filter the first voltage between the first energy provision system and the auxiliary system.

In one embodiment, the AC current may have a frequency that differs between the AC traction motor and the AC auxiliary circuit in addition to the voltage differences. In one embodiment, the aux circuit frequency may be US standard (60Hz) to one device and EU standard (50Hz). This may be selected with reference to the specific requirements of the aux circuit and the devices intended to be powered thereby.

As used herein, an element or step recited in the singular and proceeded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property.

The above description is illustrative, and not restrictive. For example, the above-described embodiments (and/or aspects thereof) may be used in combination with each other. In addition, many modifications may be made to adapt a particular situation or material to the teachings of the subject matter without departing from its scope. While the dimensions and types of materials described herein define the parameters of the subject matter, they are exemplary embodiments. Other embodiments will be apparent to one of ordinary skill in the art upon reviewing the above description. The scope of the subject matter should, therefore, be determined with reference to the appended claims, along with the full scope of equivalents to which such claims are entitled.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A system comprising:
an energy provision system configured to provide a first voltage;
a first converter configured to increase the first voltage from the energy provision system from the first voltage into at least a second voltage;
a traction system of a vehicle configured to be powered by the second voltage from the first converter;
a second converter configured to decrease the first voltage from the energy provision system from the first voltage to a third voltage which is less than the second voltage; and
an auxiliary system of the vehicle configured to be powered by the third voltage of from the second converter that is less than the second voltage.

2. The system of claim 1, wherein the energy provision system includes a bank of two or more energy systems, each of the two or more energy systems independently connected through the first converter to the traction system, the two or more energy systems configured such that one or more of the two or more energy systems are configured to power the auxiliary system.

3. The system of claim 1, wherein the auxiliary system includes one or more of house power, a hydraulic pump, a thermal management system, a fuel tender loads, a resistor grid, and an air compressor.

4. The system of claim 1, wherein the traction system includes one or more of a traction inverter, a traction motor, and a resistor grid.

5. The system of claim 1, wherein the auxiliary system includes implements for maintenance of wayside vehicles.

6. The system of claim 1, wherein the auxiliary system of the vehicle is configured to be powered by the third voltage from the second converter separately of the traction system of the vehicle being powered by the second voltage from the first converter.

7. The system of claim 1, wherein the energy provision system is configured to receive a charging current from an off-board source, the charging current configured to charge the energy provision system.

8. The system of claim 1, wherein the traction system is configured to receive a powering voltage from an off-board source, the powering voltage configured to provide power to the traction system that is at least at the second voltage.

9. The system of claim 8, wherein the off-board source includes one or more of a trolley line, a catenary, a charging station, or an electrified third rail.

10. A method comprising:
supplying electric current at a first voltage from an energy provision system;
increasing the first voltage of the electric current from the energy provision system to a second voltage using a first converter;
powering a traction system of a vehicle using the electric current at the second voltage;
decreasing the first voltage of the electric current from the energy provision system to a third voltage using a second converter; and
powering an auxiliary system of the vehicle using electric current at the third voltage.

11. The method of claim 10, further comprising receiving addition power from an off-board electrical source at a fourth voltage.

12. The method of claim 11, wherein the fourth voltage is at or above the second voltage and the fourth voltage is configured to power the traction motor.

13. The method of claim 10, further comprising recharging an energy storage device with the second voltage.

14. A method comprising:
powering a traction system of a vehicle using a first voltage from a first energy provision system;
powering an auxiliary system of the vehicle using a second voltage from a second energy provision system, where the second voltage is less than the first voltage; and
providing electrical current from the traction system to the second energy provision system using a converter to provide the electrical current to the second energy provision system at the second voltage.

15. The method of claim 14, further comprising filtering the electric current at the first voltage between the first energy provision system and the traction system.

16. The method of claim 14, further comprising providing a secondary electrical current from the first energy provision system to the second energy provision system using a secondary converter to provide the secondary electrical current to the second energy provision system at the second voltage.

17. A system comprising:
an energy provision system configured to provide a first voltage;
a converter configured to decrease the first voltage from the energy provision system into a threshold voltage;
a traction system of a vehicle configured to be powered by the first voltage from the energy provision system that is greater than the threshold voltage;
an auxiliary system of the vehicle configured to receive and be powered by the first voltage from the converter that is at or below the threshold voltage.

18. The system of claim 17, further comprising a secondary converter configured to decrease the first voltage to at or below the threshold voltage, wherein the auxiliary system of the vehicle configured to receive and be powered by the first voltage from the secondary converter that is at or below the threshold voltage.

19. The system of claim 17, wherein the auxiliary system includes one or more of house power, a hydraulic pump, a thermal management system, a fuel tender loads, a resistor grid, and an air compressor.

20. The system of claim 17, wherein the traction system includes one or more of a traction inverter, a traction motor, and a resistor grid.

21. The system of claim 17, wherein the energy provision system is configured to operate at a minimum voltage of 800V.

22. A system comprising:
a first energy provision system configured to provide a first voltage;
a traction system of a vehicle configured to be powered by the first voltage from the first energy provision system;
an auxiliary system of the vehicle configured to be powered by a second voltage from a second energy provision system, where the second voltage is less than the first voltage; and
a converter configured to receive electrical current from the traction system and configured to convert the electrical current to the second voltage, the converter configured to provide the second voltage to the second energy provision system.

23. The system of claim 22, wherein the second voltage is configured to charge the second energy provision system.

24. A system comprising:
an energy provision system configured to provide a first voltage;
a traction system of a vehicle configured to be powered by the first voltage from the energy provision system; and
an auxiliary system of the vehicle configured to be powered by the first voltage from the energy provision system.

25. The system of claim 24, further comprising a protective layer that is configured to be disposed between the energy provision system and the auxiliary system, the protective layer configured to filter the first voltage between the first energy provision system and the auxiliary system.
